Europäisches Patentamt

European Patent Office

Office européen des brevets

(11) Publication number: **0 092 614**
**B1**

# EUROPEAN PATENT SPECIFICATION

(45) Date of publication of patent specification: **11.06.86**

(21) Application number: **82302058.1**

(22) Date of filing: **22.04.82**

(51) Int. Cl.⁴: **B 01 D 3/22**

(54) Vapour-liquid contacting apparatus.

(43) Date of publication of application:
**02.11.83 Bulletin 83/44**

(45) Publication of the grant of the patent:
**11.06.86 Bulletin 86/24**

(84) Designated Contracting States:
**DE FR GB IT NL**

(56) References cited:
**FR-A-1 058 078**
**FR-A-1 301 548**
**FR-A-1 604 072**
**FR-A-2 267 812**
**US-A-3 075 752**

(73) Proprietor: **PROCON INTERNATIONAL INC.**
**50 UOP Plaza Algonquin & Mt. Prospect Roads**
**Des Plaines Illinois (US)**

(72) Inventor: **Trager, John Edward**
**2602 North Chestnut**
**Arlington Heights Illinois (US)**

(74) Representative: **Newby, John Ross et al**
**J.Y. & G.W. Johnson Furnival House 14/18 High**
**Holborn**
**London WC1V 6DE (GB)**

Courier Press, Leamington Spa, England.

## Description

The invention relates to the design of a vapour liquid or liquid-liquid contacting apparatus, e.g. a fractionation tray for use within a fractionation column. Similar types of apparatus may be found in United States patents classified in U.S. Classes 261, 202 and 239.

Fractionation trays have been in widespread commercial use for a great time, and there exists a large volume of accumulated knowledge as to the design and construction of fractionation trays. For instance, Section 18 of the 4th Edition of the *Chemical Engineer's Handbook*, McGraw-Hill Book Co., 1963, describes several different types of fractionation trays and presents a large amount of information useful in the design and operation of fractionation trays.

One type of fractionation tray which is well described in the literature is referred to as a grid tray. The vapour-liquid contacting area of this tray is often a single flat surface formed by a large number of spaced apart parallel horizontal strips or bars. The horizontal strips are separated by a small distance to allow the vertical passage of fluid through the long narrow opening between adjacent strips. This type of fractionation tray is described in U.S.—A—2,682,394; 2,711,308; 2,750,174; 2,711,307; 2,860,860; 2,875,993 and 2,882,030. It is believed that these references are directed to grid trays in which both a rising vapour and a descending liquid pass through the same elongate slots between adjacent horizontal members. That is, these references exemplify the use of a grid tray in a fractionation column which does not have downcomers to carry the liquid to the next lower tray. The horizontal members forming the vapour-liquid contacting areas in the first three of these references may have sloping or curved sides which result in the members being widest at their upper surface.

U.S.—A—4,157,905 is believed pertinent for its teaching that grid trays are recommended for use without a downcomer but could be used with downcomers.

U.S—A—2,747,849 illustrates a fractionation tray used with downcomers in which the vapour-liquid contacting area has a substantially flat surface having a large number of elongate narrow openings through which the rising vapour passes.

U.S.—A—3,592,452 presents a fluid contacting device which may be used as a fractionation tray. This device has an upper surface formed by a large number of spaced apart parallel and horizontal members which extend across the column. A second set of horizontal closely spaced members having a different alignment supports the first set of parallel members. Either the upper or lower set of parallel members may be rotated about a vertical axis to vary the available open area of the tray.

FR—A—2267812 discloses a vapour-liquid contacting tray constructed from parallel bars, the spacing between the bars narrowing in the upward direction to a parallel-sided active zone disposed adjacent to the upper surface of the tray. The prior art tray disclosed in this reference is, however, intended for counter-current liquid/vapour flow through the spacings between the bars. No downcomers are used to feed liquid to and from the tray.

The present invention provides a vapour-liquid contacting apparatus suitable for use as a fractionation tray which has desirable pressure drop and flooding characteristics.

According to the present invention, a vapour-liquid contacting apparatus which comprises a substantially horizontal tray having an upper surface and an outer edge which is adjacent to at least a portion of the inner surface of a containment vessel, the tray having a substantially flat horizontal vapour-liquid contacting area comprising a plurality of horizontal parallel members, the parallel members being shaped such that the smallest distance between any two adjacent parallel members is located at the upper surface of the adjacent parallel members and the distance between the upwardly extending sides of adjacent parallel members is at least twice as large at the bottom(s) of the adjacent parallel members as at the top(s) of adjacent parallel members, the vapour-liquid contacting area of the tray having an open area between 5.0 and 16.5 per cent, means to supply liquid to an upper part of the vessel to flow downwardly therein and means to supply vapour to a lower part of the vessel to flow upwardly therein, is characterised in that the parallel members are spaced apart at the tops thereof by a distance between 0.1 mm and 0.8 mm and in that a first downcomer supplies liquid to the upper surface of the tray at a first point, a second downcomer removes liquid from the tray at a second point and a weir is interposed between the downcomers to maintain the vapour-liquid contacting area of the tray in flooded condition during use of the apparatus.

Suitably, the parallel members of the vapour-liquid contacting area have opposing side surfaces which if extended upward would intersect at an angle between 5 and 120° at a point above the upper surface of the vapour-liquid contacting area.

In a second embodiment, the parallel members have curved sides and are shaped such that the smallest distance between any two adjacent members is located at the upper surface of the members and is less than one-half the horizontal distance separating the bottom of the adjacent parallel members.

The invention will now be further described, by way of example, with reference to the accompanying drawings, in which:—

Figure 1 is a schematic view of a vertical fractionation column which contains several fractionation trays in accordance with the present invention,

Figure 2 is a cross-section of the fractionation column of Figure 1 taken along the line 2—2 of Figure 1,

Figure 3 is a cross-sectional view on an enlarged scale of the fractionation tray shown in Figure 2 taken along the line 3—3 of Figure 2,

Figure 4 is a cross-sectional view on a further enlarged scale of a small portion of the vapour-liquid contacting area of the fractionation tray shown in Figure 3, and

Figure 5 is a cross-sectional view corresponding to Figure 4 of a small portion of vapour-liquid contacting area of a modified fractionation tray.

Vapour-liquid contacting apparatus are in widespread use in the chemical, petrochemical and petroleum industries. For instance, such apparatus is used in processes for the removal of certain compounds from vapour streams, such as the scrubbing of sulphur dioxide from a flue gas stream. One of the most common applications of vapour-liquid contacting apparatus is in the separation of chemical compounds. These separations include the production of high purity oxygen or nitrogen by the cryogenic fractionation of liquefied air, the separation of mixtures of water and any various alcohols, the fractionation of light hydrocarbons and the fractionation of crude oil.

In designing fractionation trays, and also other vapour-liquid contacting apparatus, a number of important and sometimes conflicting design characteristics must be considered. These factors include, but are not limited to, the structural strength of the apparatus and its ability to support both its own weight and the weight of the liquid which rests upon it, the size, shape and number of openings provided in the vapour-liquid contacting area of each tray, the efficiency of the tray, the tendency of the tray to "weep", the tendency of the tray to flood, and the pressure drop experienced by the vapour rising through the tray. An ideal fractionation tray must also be resistant to plugging or breakage, and be easy to assemble from a number of smaller parts which are passed into the containment vessel through the relatively small opening of a manway.

A preferred vapour-liquid contacting apparatus according to the present invention produces a relatively low pressure drop at a given upward vapour velocity, a low tendency to weep (that is to allow liquid to pass downward through the openings in the vapour-liquid contacting area), great rigidity and structural strength without the use of a large number of support elements attached to the wall of a containment vessel and which may be fabricated with a self-supporting vapour-liquid contacting area, and a low pressure drop liquid support tray for use in treating vapour streams.

The present invention thus provides many of the desired characteristics of a fractionation tray through a unique arrangement of several structural elements. At the heart of a vapour-liquid contacting apparatus according to the invention is a vapour-liquid contacting area formed by the upper surfaces of a large number of closely spaced-apart parallel and horizontal members. These parallel members are preferably of equal size and each has a width, in the said area, which is at least five times as great as the distance, also in the said area, between adjacent members in the tray. The upper surface of these members forms the substantially flat upper surface of the vapour-liquid contacting area of the apparatus. These upper parallel members are attached (e.g. by welding) to a second plurality of horizontal supporting bars or lower members which are generally disposed perpendicular to the upper plurality of members. The lower members may have a depth which is several times that of the upper members to provide an integrated structure for each tray which has sufficient rigidity and strength to independently withstand the weight loading experienced at each level within a fractionation column. Normally there are fewer of the lower parallel members in each tray, so that they are much more widely spaced apart than the upper parallel members in each tray. As used herein, the term "vapour-liquid contacting area" of a tray is intended to refer to that portion of the surface area of the tray through which it is desired for vapour to pass upward and which contains at least 95% of the total open area of the tray.

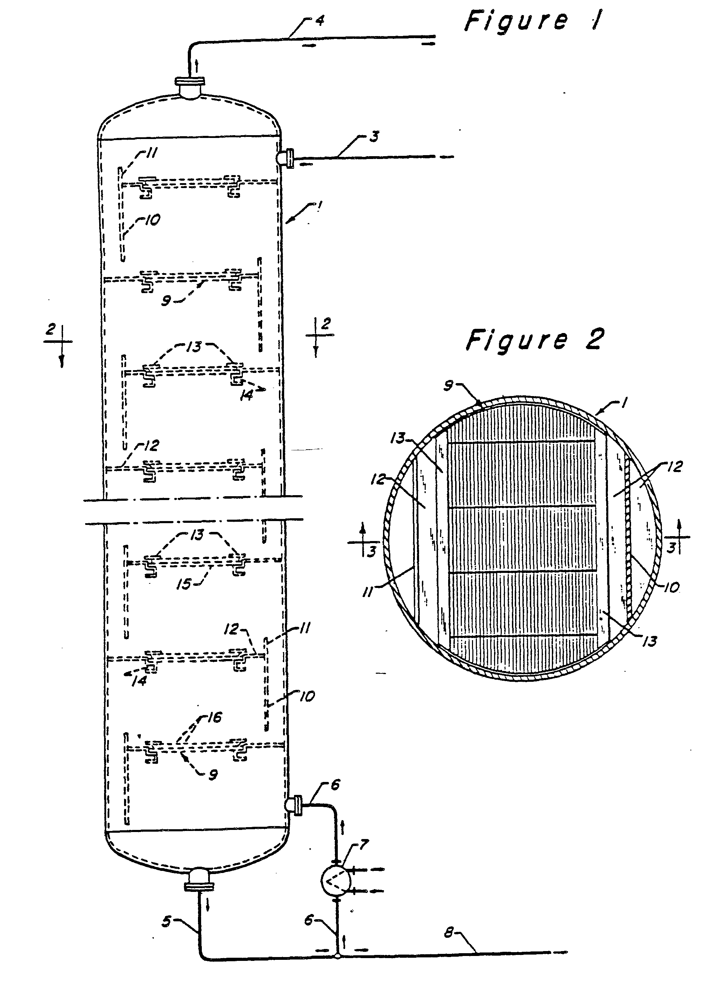

Referring now to Figure 1, there is shown a simplified illustration of a fractionation column 1 utilizing several fractionation trays 9 constructed in accordance with the present invention. A feed stream is passed into an intermediate point of this column at a point not shown. The liquid which accumulates at the bottom of the column 1 is withdrawn through a line 5 and divided into a first portion removed through a line 8 as a bottoms product and a second portion which is passed through a line 6 and an external reboiler 7 to generate vapour which is passed into a lower portion of the fractionation column through the line 6. An overhead vapour stream is removed from the column in a line 4 and condensed by means not shown to form overhead liquid which is divided into an overhead product stream which is withdrawn from the system, and a liquid reflux stream which is returned to the column 1 through a line 3. Alternatively, the feed stream may be passed into the column 1 through the line 3. Liquid from the line 3 flows horizontally across the uppermost fractionation tray 9. It then passes over the top of a weir 11 and enters a downcomer through which it descends to the next lowest fractionation tray. The liquid phase present within the fractionation column thereby travels downward in a sigmoid path travelling from tray to tray through the appropriate downcomer. The vapours present within the column 1, rise through the vapour-liquid contacting area of the trays 9 and thereby flow in a generally countercurrent direction to the descending liquid.

Figure 2 is the view looking downward on the upper surface of one of the trays 9. In this view, it may be seen that the tray 9 has a circular outer edge which abuts a large portion of the inner surface of the vertical containment vessel of the column 1. This provides a seal capable of blocking fluid flow at the edges of the tray. This seal extends around the entire tray including an imperforate support 12 under the inlet downcomer.

The only point at which the tray is not adjacent to the inner surface of the column is along the outlet weir 11. The vapour-liquid contacting area of each tray 9 is formed by five panels each comprising a large plurality of parallel members which run across the upper surface of the tray parallel to the chordal downcomer walls 10 and perpendicular to a line drawn between the central vertical axes of the inlet and outlet downcomers. The individual panels rest upon the imperforate supports 12, with the seam between the ends of the panels and the supports being covered by long narrow cover plates 13.

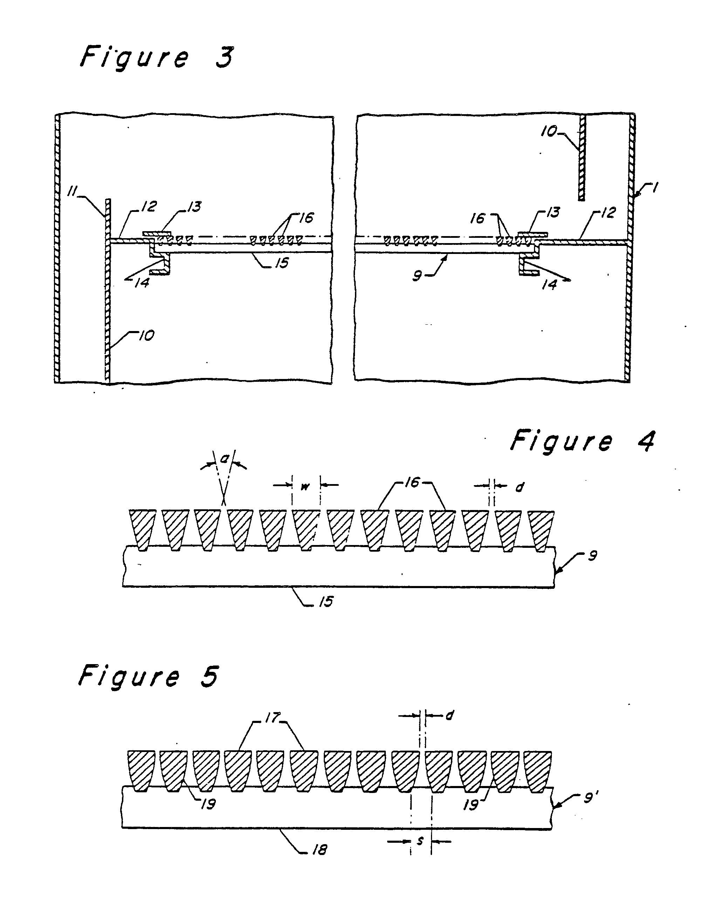

Figure 3 is an enlarged cross-sectional view of the fractionation tray 9 shown in Figure 2. An inlet downcomer wall 10 is present at the right-hand side of this Figure. One horizontal imperforate support 12 attached to the inner surface of the vertical wall of the column 1 is located immediately below the inlet downcomer. This support has a channelled lip 14 for added structural strength. On the left-hand side of the Figure, there is shown a second imperforate support 12 having a similar lip which is attached to the outlet downcomer. The wall 10 of the outlet downcomer extends upward to an upper edge which acts as the outlet weir 11 of the fractionation tray and retains a minimum liquid level upon the upper surface of the tray. The vapour-liquid contacting area of the tray is formed by the five perforate panels which rest upon and extend between the supports 12. With a proper upward vapour flow, the panels and the supports act as a unitary liquid support plate which retains the liquid flowing across the tray. Vapour rises through the elongate openings between upper parallel wires or members 16 which are supported by lower members 15. The ends of the lower members 15 rest on the supports 12, with the seam between the panels and the supports 12 being covered by a plate 13 which is bolted to the supports 12 to hold the panels in position.

Figure 4 shows a detail of a preferred construction of the panels forming the vapour-liquid contacting area of the tray shown in Figure 3. The upper parallel members 16 are perpendicular to the lower support members or bars 15. The lower members may be round, wedge-shaped or rectangular in cross-section. The upper members 16 have a wedge-shaped cross-section such that the opposing upwardly extending surfaces of adjacent members would intersect at an angle "a" if extended above the surface of the tray. This angle is preferably between 10 and 90°. The small distance "d" and the much larger distance "w", which is referred to herein as the width of the upper member, are also indicated in Figure 4.

Figure 5 shows an alternative construction for the vapour-liquid contacting area. In this embodiment, upwardly extending sides 19 of upper members 17 are curved rather than flat. The other aspects of this construction are the same as in Figure 4. The distance "d" between two adjacent upper members 17 is smallest at the flat upper surface of the members. The space "s" at the bottom of the members 17 is at least twice as large as the distance "d" and may be 3 to 8 times greater in length. Each elongate opening therefore tapers to its smallest width at the upper surface of the vapour-liquid contacting area. The upper members 17 are attached to horizontal support members 18, which are perpendicular to the upper horizontal members.

The vapour-liquid contacting area of an apparatus according to the invention is preferably formed by a grid of perpendicularly arranged metal members which are welded together to form a high strength screen. This grid is flat and is mounted in a substantially horizontal position as part of the apparatus. The grid has an upper surface formed by an upper layer of wires, which are all located at the same elevation. The wires of the upper layer are parallel to each other and separated by only a small distance. Preferably the upper surface of each of the upper wires is flat and horizontal such that the upper surface of the grid is flat and uninterrupted except for the openings between adjacent wires. The parallel wires of the upper layer are perpendicular to the parallel members of the lower layer. The members forming the upper and lower layers are attached at each point they intersect with the lower members functioning as the support bars and connecting means for the upper wires. It is believed the lower members do not affect the vapour-liquid contacting action of the apparatus. The lower support members will normally be larger in cross-sectional size than the upper wires. Normally, there will be at least three times as many upper members as lower members. It is greatly preferred that the perpendicularly disposed members are welded to each other but they may be attached in other ways, especially if nonmetallic members are used in the apparatus.

Welded grids of perpendicular bars are in widespread commercial use. Some of the typical applications of these structures are water well intake screens, catalyst retention screens in catalytic reactors and fluid collection or distribution assemblies. These known grids are often welded together in the form of a cylindrical gridwork by wrapping a continuous wire over an array of longitudinal bars. This gridwork is then cut lengthwise and flattened to form the finished grid. For instance, in U.S.—A—2,046,456, there is shown the use of a cylindrical porous wall of this type of construction as a well point and well screen. A centrifugal fluid strainer using a cylindrical grid is shown in U.S.—A—3,481,474. A screening unit for use in the mining industry which includes a flat porous grid of the preferred construction is shown in U.S.—A—3,483,974. This porous grid may have a structure and configuration very similar to that employed in the vapour-liquid contacting area of the apparatus according to this invention. U.S.—A—3,584,685 presents a strainer using a welded cylindrical filter element. U.S.—A—3,667,615 illustrates many of the different welded grids which may be formed using bars of different cross-sectional shape. U.S.—A—4,170,626 presents a gas distribution device for use in fluidized beds of solid particles comprising a cylindrical porous wall formed of a grid having the preferred construction.

The upper wires preferably have flat vertical sides similar to those shown in Figure 4 but may have different shapes. In this embodiment of Figure 4, the opposing surfaces of adjacent wires are inclined from the true vertical such that the elongate opening between the adjacent wires forms a "V" slot having its broadest opening at the bottom. An alternative method of describing this configuration is that the opposing surfaces of adjacent wires would intersect at an angle between 5 and 120 degrees if extended above the upper surface of the grid. Preferably, this angle is between 10 and 90 degrees.

The above cited references, which describe various uses of welded wire grids, also describe grids of various types including those having a "V" slot opening. This opening configuration is often credited with being beneficial to the operation of the different apparatus, such as well screens, as it tends to be self cleaning. The "V" slot is characterised as self-cleaning since any particles or movable deposits which pass into the smallest part of the slot will be removed from the screen by the flowing fluid. This is because in the applications described in these references the screens are oriented such that the fluid flows inward through the smallest opening of the V-slot and then through the screen.

In the trays described, the fluid flow is upward through the contacting area. The direction of the fluid flow through the trays is therefore believed to be opposite that used in the previously described filtration or collection devices which have screens with self-cleaning V slots. In the subject apparatus the fluid flows upward into the largest part of the slot and then towards the smallest part of the slot where it exits. This flow path is thought to be at least partially responsible for the low pressure drop and low weepage which is observed with the subject apparatus. The rising vapours are chanelled into the smallest part of the openings. This increases velocity effects which tend to support the liquid on the upper surface of the contacting area rather than allowing the liquid to flow downward.

It is believed that the shape of the opening also produces the low pressure drop which has been observed across the apparatus (the pressure differential between points below and above the contacting area) in dry tests and in simulations because the opening has the form of a small venturi, which itself has a low pressure drop. The liquid which rests upon the upper surface of the individual parallel members forming the top of the contacting area may also aid in reducing the pressure drop through the contacting area by forming the curved outlet of the venturi. That is, the liquid resting on the top surfaces of two adjacent parallel members may form into mounds having a rounded upper surface such that these two mounds, at least momentarily, resemble the smooth outlet throat of the venturi.

The desired tapered fluid passageway or opening between adjacent members may be a shape different than the preferred "V" slot. The shape of this elongate opening is determined by the shape of the upper members. The upper members can have a wide variety of shapes other than that shown in Figure 4. For instance, in Figure 5 these same members have curved opposing vertical sides. Another alternative is for the opposing sides to have different shapes or inclinations. As one example of this, the upper members could have a cross-section in the shape of a right triangle and be fastened in place so that they have a horizontal upper surface, a truly vertical side and a single inclined side. The upwardly extending sides of the members are preferably inclined from the true vertical. Unless otherwise specified, any reference herein to the sides or vertical sides of the members is intended to refer to the flat or curved inclined surfaces which extend downward from the upper surface of the members. Any reference herein to opposing sides is intended to refer to the adjacent sides of two different adjacent members.

The elongate parallel members which form the upper surface of the vapour-liquid contacting area are spaced apart by relatively small distances compared to the opening present in most commonly used fractionation trays. The distance between adjoining members ("d" in Figure 4) is between 0.1 mm and 0.8 mm. Preferably, this distance is between 0.2 mm and 0.5 mm. Unless otherwise specified, any reference to the spacing or distance between the parallel members is intended to indicate the minimum distance between adjacent members, which is preferably at the top of the members. The width of the uppermost portion of these members ("w" in Figure 4) is preferably between about 1.5 mm and 5.5 mm. These upper members are preferably made of stainless steel or other non-corroding material since any corrosion would tend to reduce the already small space between the adjacent upper members.

It is believed that because this space is small, the surface tension of the liquid tends to suspend the liquid above the opening thereby resulting in the low tendency of the apparatus to "weep" in fractionation tray simulations. One of the most important factors in determining the distance "d" and the width "w" of the upper members is the total open area which is to be provided in the vapour-liquid contacting area. This open area should be between 5.0 and 16.5 per cent of the total surface area of the vapour-liquid contacting area. Preferably, the open area of the subject apparatus is between 7.5 and 13.5 per cent when used as a fractionation tray. As used herein, the term "open area" is intended to refer to the per cent of the total area of the tray, exclusive of downcomer areas, which is intentionally left open by the provisions of perforations or openings for the upward passage of the vapour or liquid. The number and dimensions of the lower perpendicular members is set by the expected total weight loading on the vapour-liquid contacting area and the size of individual sections of the contacting area which are self-supporting.

The vapour-liquid contacting area of the apparatus is preferably assembled from rectangular panels having a maximum size of about 3 meters by about 0.45 meters. These panels may be passed into the containment vessel through an available opening such as a manway and then laid in place on supports attached to the inner surface of the vessel and extending across its cross-section. The panels are then bolted or clamped down to prevent movement. The number and size of the panels will be set by the required diameter of the containment vessel.

One embodiment of the invention may be characterized as a vapour-liquid contacting apparatus useful as a fractionation column which comprises a vapour containment vessel having a vertical sidewall and a cylindrical inner surface; a first downcomer means and a lower second downcomer means located adjacent the inner surface of the containment vessel and opposite each other; and a fractionation tray extending horizontally between the first and the second downcomer means and comprising a substantially flat and horizontal vapour-liquid contacting area having an upper surface and comprising a plurality of horizontal parallel members spaced apart by a distance between about 0.1 mm and about 0.8 mm and attached to a smaller second plurality of horizontal bars which are located below the parallel members, with the horizontal bars being substantially perpendicular to the parallel members and with the parallel members being substantially perpendicular to a line between the first and the second downcomer means, and with adjacent parallel members of the vapour-liquid contacting areas having opposing surfaces which if extended upward, would intersect at an angle between 5 and 120 degrees at a point above the upper surface of the vapour-liquid contacting area.

A typical fractionation tray comprises an imperforate horizontal area located under the inlet downcomer. This is a liquid receiving area and is part of the "dead area" of the tray through which it is intended for no liquid or vapour to pass. This liquid receiving area may be separated from the vapour-liquid contacting area by a vertical inlet weir, but the use of such a weir is not preferred. Inlet weirs are normally only used when liquid rates are expected to be low enough to allow vapour to rise through the column if the weir is not present. Additional amounts of dead area are normally located at the periphery of the tray especially at points where it rests on a support ring or lip fastened to the inner surface of the containment vessel. An outlet weir, which is normally formed by an upward extension of the outlet downcomer wall, is commonly present on the upper surface of the tray. The height of the outlet weir is set by the static liquid level which is to be present on the tray. The inlet and outlet downcomers are often vertical chordal walls as this is a simple structure to fabricate and also serves to both collect and discharge the descending liquid in a manner which promotes uniform liquid flow across the tray. It is preferred that no flow directing vanes are placed on the tray, although these and other flow distribution means such as specially designed inlet and outlet weirs could be used on the subject apparatus if it is quite large in diameter. The tray or other contacting apparatus is preferably used with its upper surface horizontal, although the tray may be slightly tilted toward the liquid outlet to reduce the gradient required for the desired liquid flow rate across the surface of the tray. As used herein, the term "horizontal" is intended to indicate that the inclination differs from true horizontal by less than 5 degrees.

The horizontal portion of the total apparatus, in use, is located within a containment vessel. This vessel will have a vertical inner surface if it is part of a fractionation column, but the inner surface could be sloped if the apparatus is used for other purposes. As used herein, the term "vertical" is intended to indicate that the inclination differs from true vertical by less than 5 degrees. The containment vessel will normally be entirely enclosed except for the necessary transfer conduits for entering and exiting fluid streams, control system sensors, etc. Fractionation columns are normally fabricated from metals such as carbon or stainless steel. Highly corrosive compounds may dictate the use of more exotic metals. The containment vessels of other types of contacting apparatus, such as flue gas scrubbing towers, may be made from other materials including concrete or fibre-reinforced polyester or other plastics.

The apparatus in accordance with this invention is not limited to use as a fractionation tray. It may be used in a wide variety of vapour-liquid contacting processes including pollution control and solvent recovery processes. One example of this is the scrubbing of power plant flue gases to reduce sulphur oxide emissions, a situation in which a very low pressure drop through the contacting apparatus is desired. The apparatus may also be utilized in absorption columns, such as those used to remove hydrogen sulphide or heavy hydrocarbons from streams of vaporous light hydrocarbons. It is contemplated that the subject apparatus could also be utilized to perform separations using liquid-liquid extraction with a minimal amount of structural change.

A broad range of operating conditions for a fractionation column include a pressure between about 0.1 atmosphere absolute and about 35 atmospheres and a bottoms temperature between 0°C and about 350°C. Cryogenic separations of various normally gaseous materials, such as oxygen, nitrogen and carbon dioxide, can be conducted at much lower temperatures including temperatures of about minus 150°C or below. A reflux ratio between about 1.0:1.0 and about 5.0 : 1.0 may be employed, and the column will normally contain from 10 to about 90 or more trays.

## Claims

1. A vapour-liquid contacting apparatus which comprises a substantially horizontal tray (9, 12) having an upper surface and an outer edge which is adjacent to at least a portion of the inner surface of a containment vessel (1), the tray having a substantially flat horizontal vapour-liquid contacting area comprising a plurality of horizontal parallel members (16, 17), the parallel members (16, 17) being shaped such that the smallest distance (d) between any two adjacent parallel members (16, 17) is located at the upper surface of the adjacent parallel members and the distance between the upwardly extending sides (19) of adjacent parallel members (16, 17) is at least twice as large at the bottom(s) of the adjacent parallel members as at the top(s) of adjacent parallel members, the vapour-liquid contacting area of the tray having an open area between 5.0 and 16.5 per cent, means (3) to supply liquid to an upper part of the vessel (1) to flow downwardly therein and means (6) to supply vapour to a lower part of the vessel (1) to flow upwardly therein, characterised in that the parallel members (16, 17) are spaced apart at the tops thereof by a distance between 0.1 mm and 0.8 mm and in that a first downcomer (10) supplies liquid to the upper surface of the tray (9, 12) at a first point, a second downcomer (10) removes liquid from the tray (9, 12) at a second point and a weir (11) is interposed between the downcomers (10) to maintain the vapour-liquid contacting area of the tray (9, 12) in flooded condition during use of the apparatus (1).

2. The apparatus of claim 1, characterised in that the parallel members (16, 17) have a flat upper surface and have a maximum width between 1.5 mm and 5.5 mm.

3. The apparatus of claim 1 or claim 2, characterised in that the parallel members (16) have flat vertically sloping sides.

4. The apparatus of claim 3, characterised in that the adjacent parallel members (16) have opposing sides which if extended upward would intersect at an angle (a) between 5 and 120 degrees at a point above the upper surface of the vapour-liquid contacting area.

5. The apparatus of claim 4, characterised in that the opposing sides of adjacent parallel members would intersect at an angle (a) between 10 and 90 degrees if extended upward.

6. The apparatus of claim 1 or claim 2, characterised in that the parallel members (17) of the vapour-liquid contacting area have curved vertically sloping sides (19).

7. The apparatus of any preceding claim, characterised in that the parallel members (16) of the vapour-liquid contacting area are spaced apart by a distance between 0.2 and 0.5 mm.

8. The apparatus of any preceding claim, characterised in that the vapour-liquid contacting area has an open area between 7.5 and 13.5 per cent.

9. The apparatus of any preceding claim, characterised in that liquid flow from the first to the second downcomer (10, 10) extends perpendicular to the parallel members (16, 17) and the weir (11) extends parallel to said parallel members (16, 17).

10. The apparatus of any preceding claim, characterised in that the liquid support tray is a fractionation tray located within a fractionation column (1) defining the vapour containment vessel.

## Revendications

1. Appareil de contact vapeur-liquide qui comprend un plateau en substance horizontal (9, 12) comportant une surface supérieure et un bord extérieur qui est adjacent à au moins une partie de la surface interne d'une enveloppe de confinement (1), le plateau présentant une zone de contact vapeur-liquide horizontale en substance plane comprenant plusieurs éléments parallèles horizontaux (16, 17), les éléments parallèles (16, 17) étant façonnés de telle façon que la plus courte distance (d) séparant deux éléments parallèles adjacents (16, 17) quelconques soit située au niveau de la surface supérieure des éléments parallèles adjacents et que la distance entre les côtés s'étendant vers le haut (19) d'éléments parallèles adjacents (16, 17) soit au moins deux fois plus grande au niveau de l'extrémité inférieure des éléments parallèles adjacents qu'au niveau de leur extrémité supérieure, la zone de contact vapeur-liquide du plateau présentant une aire ouverte de 5,0 à 16,5%, un moyen (3) pour admettre dans une partie supérieure de l'enveloppe (1) du liquide qui s'y écoule vers le bas et un moyen (6) pour admettre dans une partie inférieure de l'enveloppe (1) de la vapeur qui s'y écoule vers le haut, caractérisé en ce que les éléments parallèles (16, 17) sont espacés, au niveau de leur extrémité supérieure, d'une distance comprise entre 0,1 mm et 0,8 mm et un premier déversoir (10) fournit du liquide à la surface supérieure du plateau (9, 12) en un premier point, un second déversoir (10) évacue du liquide du plateau (9, 12) en un second point et un seuil de trop-plein (11) est intercalé entre les déversoirs (10) pour maintenir la zone de contact vapeur-liquide du plateau (9, 12) à l'état submergé pendant l'utilisation de l'appareil (1).

2. Appareil suivant la revendication 1, caractérisé en ce que les éléments parallèles (16, 17) présentent une surface supérieure plane et ont une largeur maximum comprise entre 1,5 et 5,5 mm.

3. Appareil suivant la revendication 1 ou 2, caractérisé en ce que les éléments parallèles (16) comportent des côtés plats inclinés verticalement.

4. Appareil suivant la revendication 3, caractérisé en ce que les éléments parallèles adjacents (16) comportent des côtés opposés qui, s'ils étaient prolongés vers le haut, se couperaient sous un angle (a) compris entre 5 et 120° en un point situé au-dessus de la surface supérieure de la zone de contact vapeur-liquide.

5. Appareil suivant la revendication 4, caractérisé en ce que les côtés opposés d'éléments parallèles adjacents se couperaient sous un angle (a) compris entre 10 et 90° s'ils étaient prolongés vers le haut.

6. Appareil suivant la revendication 1 ou 2, caractérisé en ce que les éléments parallèles (17) de la zone de contact vapeur-liquide présentent des côtés courbes inclinés verticalement (19).

7. Appareil suivant l'une quelconque des revendications précédentes, caractérisé en ce que les éléments parallèles (16) de la zone de contact vapeur-liquide sont espacés l'un de l'autre d'une distance comprise entre 0,2 et 0,5 mm.

8. Appareil suivant l'une quelconque des revendications précédentes, caractérisé en ce que la zone de contact vapeur-liquide présente une aire ouverte de 7,5 à 13,5%.

9. Appareil suivant l'une quelconque des revendications prédédentes, caractérisé en ce que l'écoulement de liquide du premier vers le second déversoir (10, 10) est perpendiculaire aux éléments parallèles (16, 17) et le seuile de trop-plein (11) s'étend parallèlement aux dits éléments parallèles (16, 17).

10. Appareil suivant l'une quelconque des revendications précédentes, caractérisé en ce que le plateau de support de liquide est un plateau de fractionnement installé dans une colonne de fractionnement (1) définissant l'enveloppe de confinement de vapeur.

**Patentansprüche**

1. Dampf/Flüssigkeitskontaktiervorrichtung, bestehend aus einem im wesentlichen horizontalen Boden (9, 12) mit einer oberen Fläche und einer an mindestens einen Teil der Innenfläche eines Behältergefässes (1) anliegenden Aussenkante, wobei der Boden eine im wesentlichen flache horizontale Dampf/Flüssigkeitskontaktierfläche mit einer Mehrzahl horizontaler paralleler Glieder (16, 17) aufweist, wobei die parallelen Glieder (16, 17) dergestalt sind, dass der kleinste Abstand (d) zwischen je zwei benachbarten parallelen Gliedern (16, 17) an deren oberer Fläche liegt und der Abstand zwischen den sich nach oben erstreckenden Seiten (19) benachbarter paralleler Glieder (16, 17) an deren Unterende(n) mindestens zweimal so gross ist wie an dem bzw. den Oberende(n) benachbarter paralleler Glieder, wobei die Dampf/Flüssigkeitskontaktierfläche des Bodens eine Freifläche zwischen 5,0 und 16,5 Prozent aufweist, aus Mitteln (3) zur Flüssigkeitszufuhr zu einem oberen Teil des Behälters (1) für eine Strömung von oben nach unten darin sowie aus Mitteln (6) zur Dampfzufuhr zu einem unteren Teil des Behälters (1) für eine Strömung von unten nach oben darin, dadurch gekennzeichnet, dass die parallelen Glieder (16, 17) an ihren Oberenden um einen Abstand zwischen 0,1 mm und 0,8 mm auseinanderliegen, und dass ein erster Ablauf (10) Flüssigkeit an einem ersten Punkt auf die obere Fläche des Bodens (9, 12) liefert, ein zweiter Ablauf (10) an einem zweiten Punkt Flüssigkeit von dem Boden (9, 12) entfernt und zwischen den Abläufen (10) ein Wehr (11) angeordnet ist, um im Gebrauch der Vorrichtung (1) die Dampf/Flüssigkeitskontaktierungsfläche des Bodens (9, 12) im gefluteten Zustand zu halten.

2. Vorrichtung nach Anspruch 1, dadurch gekennzeichnet, dass die parallelen Glieder (16, 17) eine flache obere Fläche und eine maximale Breite zwischen 1,5 und 5,5 mm aufweisen.

3. Vorrichtung nach Anspruch 1 oder 2, dadurch gekennzeichnet, dass die parallelen Glieder (16) flache, senkrecht abfallende Seiten aufweisen.

4. Vorrichtung nach Anspruch 3, dadurch gekennzeichnet, dass die benachbarten parallelen Glieder (16) gegenüberliegende Seiten aufweisen, die sich nach oben verlängert unter einem Winkel (a) zwischen 5 und 120 Grad an einem Punkt über der oberen Fläche der Dampf/Flüssigkeitskontaktierfläche schneiden würden.

5. Vorrichtung nach Anspruch 4, dadurch gekennzeichnet, dass sich die gegenüberliegenden Seiten benachbarter paralleler Glieder nach oben verlängert unter einem Winkel (a) zwischen 10 und 90 Grad schneiden würden.

6. Vorrichtung nach Anspruch 1 oder 2, dadurch gekennzeichnet, dass die parallelen Glieder (17) der Dampf/Flüssigkeitskontaktierfläche gewölbte, senkrecht abfallende Seiten (19) aufweisen.

7. Vorrichtung nach einem der vorhergehenden Ansprüche, dadurch gekennzeichnet, dass die parallelen Glieder (16) der Dampf/Flüssigkeitskontaktierfläche um einen Abstand zwischen 0,2 und 0,5 mm auseinanderliegen.

8. Vorrichtung nach einem der vorhergehenden Ansprüche, dadurch gekennzeichnet, dass die Dampf/Flüssigkeitskontaktierfläche eine Freifläche zwischen 7,5 und 13,5 Prozent aufweist.

9. Vorrichtung nach einem der vorhergehenden Ansprüche, dadurch gekennzeichnet, dass sich die Flüssigkeitsströmung vom ersten zum zweiten Ablauf (10, 10) senkrecht zu den parallelen Gliedern (16, 17) und sich das Wehr (11) parallel zu diesen erstreckt.

10. Vorrichtung nach einem der vorhergehenden Ansprüche, dadurch gekennzeichnet, dass der die Flüssigkeit tragende Boden ein in einer das Dampfbehältergefäss begrenzenden Fraktionierkolonne (1) angeordneter Fraktionierboden ist.

Figure 1

Figure 2

Figure 3

Figure 4

Figure 5